# EUROPEAN PATENT APPLICATION

(11) **EP 3 892 528 A1**
(43) Date of publication of application: **13.10.2021**
(21) Application number: 21165847.1
(22) Date of filing: 30.03.2021
(51) Int. Cl.: B63B 22/00, B64D 1/02

(54) **CONTAINER FOR LAUNCHING SONAR BUOYS**

(30) Priority: 08.04.2020 IT 202000007540
(71) Applicant: AEREA S.p.A., 22078 Turate (CO) (IT)
(72) Inventor: PERNECHELLE, Luca Andrea, 20099 Sesto San Giovanni (Milano) (IT)
(74) Representative: Buzzi, Franco

(57) **Abstract**

Container (1) for housing and launching sonar buoys (sonobuoy) (2, 3) comprising a diverter (6) and a casing (4, 5) divided into two portions by a cap (10). The container (1) is configured to make the presence or absence of the cap (10) selective so as to be adapted to house and launch a single buoy of class A (3).

## Description

### Field of the invention

The present invention relates to a container for housing and launching sonar buoys, so-called sonobuoy, and more particularly it relates to such a container designed to be installed in a launch tube provided with a pneumatic system.

### State of the prior art

Sonar buoys are devices used for the identification - at sea - of submerged bodies, such as submarines, and for scientific purposes such as seafloor mapping and ocean thermal tracking. Currently, the most widely used model of sonar buoys is the Class A one. These buoys have a diameter of 124mm and a length of 914mm and they are conveniently supplied in a launch container, of the so-called SLC type. The buoy-container assembly is installed in a launch tube and the buoy is ejected under the command of the pilot and the on-board personnel by means of a pyrotechnic or pneumatic actuation.

These containers are normally disposable, they are made of polymer and they are provided with a standard mechanical interface so as to be installed in a launch tube, and a standard pneumatic interface so as to be connected to the pneumatic system of the launch tube.

Buoys from other classes have recently been developed, among which one of the most widely used, especially in Europe, is class G which has the same diameter as a buoy of class A and a length that is about half of the latter, i.e. 419mm.

Thus, there currently arises the problem of making the loading and launching of buoys of class A or buoys of class G into and from the launch tube easier and more cost-effective.

Patent US 10106228 B1 discloses a container including a cylindrical casing partitioned - by a cap - into two portions, each designed to contain a buoy of class G. The container is provided with a diverter that can be automatically switched from a first position in which it places the pneumatic system in communication with one of the aforementioned portions of the casing iso as to eject the buoy contained therein, to a second position, in which the pneumatic system is placed in communication with another portion of the casing so as to eject the second buoy housed in the container.

Such a solution does not allow to solve the problem highlighted above. As a matter of fact, launching a buoy of class A requires to replace the entire container with the entailed challenges and increase of costs.

### Summary of the invention

The object of the present invention is to overcome the aforementioned drawback. In order to achieve such object, the invention relates to a container of the type defined in the preamble of claim 1, whose primary characteristic lies in the fact that the casing is configured to make the presence or absence of the first cap selective so as to be adapted to house a single buoy of class A, and in the fact that the shutter is set in the second position, that is in the position in which the pneumatic system is placed in communication with the first portion of the casing, in the absence of the cap.

In this manner, it is possible to provide a single container which, once installed in a launch tube, can be conveniently and easily configured to house and launch both a single buoy of class A and a pair of buoys of class G, thus leading to considerable logistical advantages (there is no need for two different containers) and reuse.

In a preferred embodiment of the invention, the diverter comprises a casing provided with an air opening and inside which the shutter is hinged. Such shutter comprises a plate-like body including an end edge folded so as to form a wall extending perpendicularly to the plate-like body. Furthermore, the shutter has an opening carrying a cage for supporting an axially slidable plunger, a tubular duct arranged adjacent such cage, means designed to drive the shutter in rotation between a first position, in which the plunger shuts the first pneumatic connection and the pneumatic system is placed in communication with the second portion of the casing by means of the opening of the casing and the second pneumatic connection, and a second position, in which the plunger opens the first pneumatic connection, the wall occludes the opening, and the duct places the pneumatic system in communication with the first portion of the casing by means of the first pneumatic connection.

In an embodiment according to the invention, the plunger comprises an inner plunger, a secondary plunger and a spring configured so that during a first impulse of the pneumatic system the inner plunger retracts into the secondary plunger and the secondary plunger occludes the first pneumatic connection locking the rotation of the shutter, and at the end of the first impulse of the pneumatic system, the spring actuates the secondary plunger so as to open the first pneumatic connection and release the rotation of the shutter.

According to the invention, the aforementioned shutter conveniently comprises a switch designed to manually switch the shutter to the second position when the casing is adapted for housing a single buoy of class A.

In an embodiment according to the invention, the aforementioned means designed driving the shutter in rotation comprise a torsion spring.

According to a further aspect of the invention, the aforementioned second pneumatic connection comprises at least one tube embedded inside the side wall of the container.

Furthermore, according to the invention, the container may comprise a pair of openings designed for setting the buoys and the aforementioned first cap.

### Brief description of the drawings

Further characteristics of the invention will be apparent from the following detailed description, with reference to the attached drawings, provided by way of non-limiting example, wherein:
- figure 1 is a schematic perspective view of an embodiment of the container according to the invention,
- figures 2 and 3 are perspective views of two different types of sonar buoys that can be housed and launched from the container according to the invention,
- figures 4 and 5 are schematic partially sectioned perspective views of two different configurations of use of the container according to the invention,
- figures 6 and 7 are perspective views of two details of figure 1,
- figure 8 is an exploded view of the details of figures 6 and 7,
- figures 9-14 are schematic views exemplifying the operation of the container of sonar buoys according to the invention.

### Detailed description of the invention

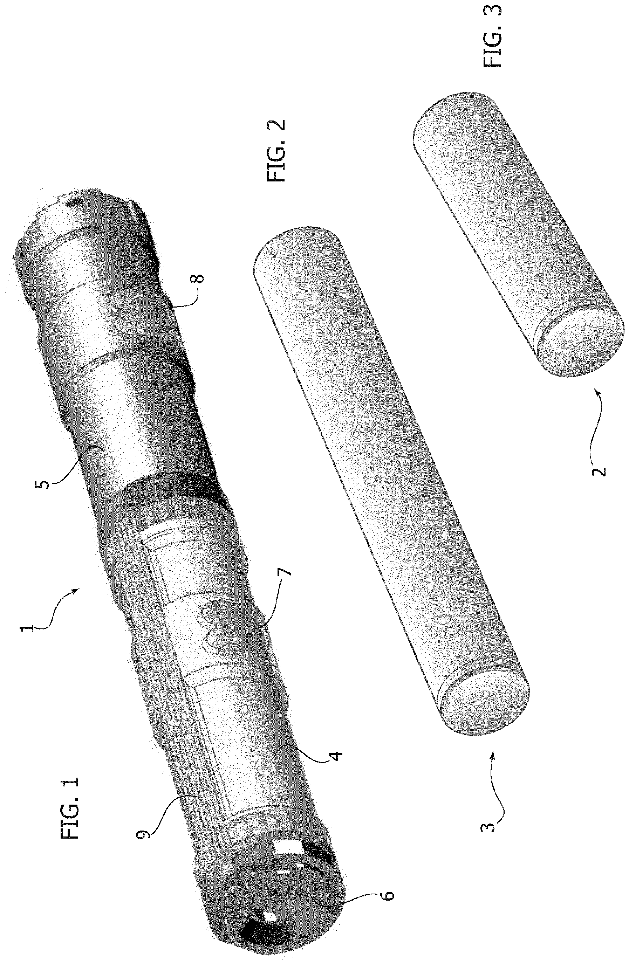

With reference initially to figure 1, a container for housing and launching sonar buoys, the so-called sonobuoys, and more particularly for launching two buoys of class of class G 2, shown in figure 3 or of a single buoy of class A 3 shown in figure 2, is indicated with 1.

Such container 1 is designed to be installed inside launch tubes, not shown since they are known to a man skilled in the art, typically used on helicopters and airplanes.

The container 1 comprises a cylindrical casing partitioned into two portions 4, 5 as will be described hereinafter and it is provided with a diverter 6 arranged at one end of the casing 4 and designed so as to be coupled with the pneumatic system present in the launch tube. Each of the portions of the casing 4, 5 is provided with a corresponding opening 7, 8 to allow an operator to access the internal of the container 1 for setting the buoys 2, 3.

Figure 1 further shows a plurality of tubes 9 embedded along the outer wall of the first portion 4 of the casing as will be described hereinafter.

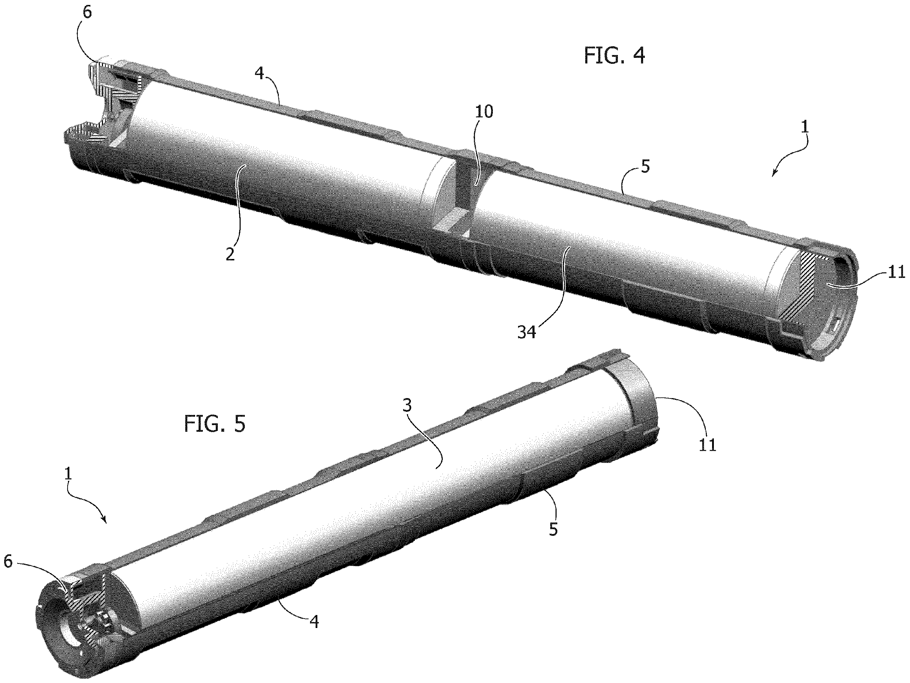

With reference to figure 4, a first watertight cap 10 partitions the casing into two equivalent portions 4, 5, each arranged to contain a buoy of class G 2, and a second cap 11 is applied at the end of the casing 5 opposite to that in which the diverter 6 is applied so as to seal the second portion 5 of the container 1.

In Figure 5 the container 1 according to the invention is shown in the configuration for containing and launching a single buoy of class A 3, in which the cap 10 was removed to place the two portions of the casing in communication forming a single housing.

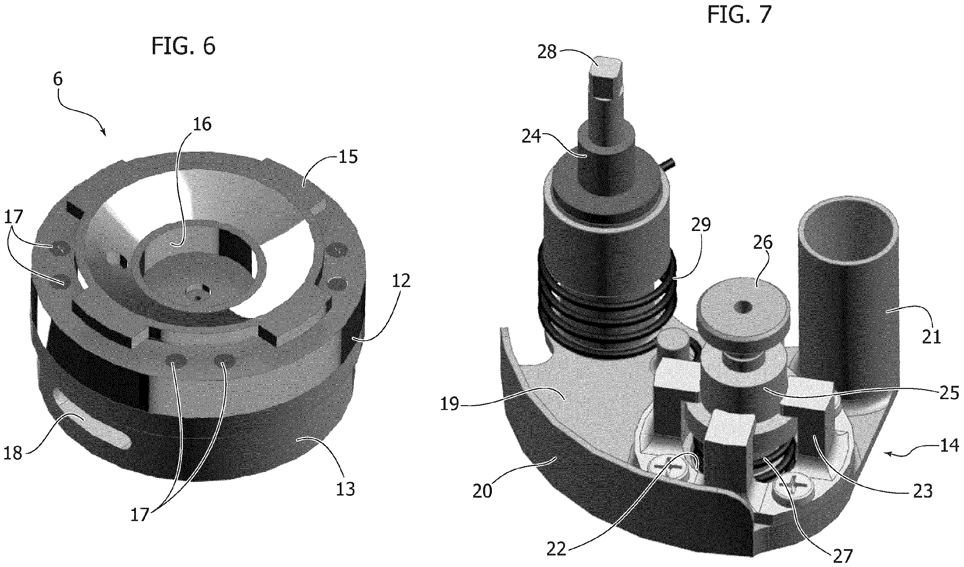

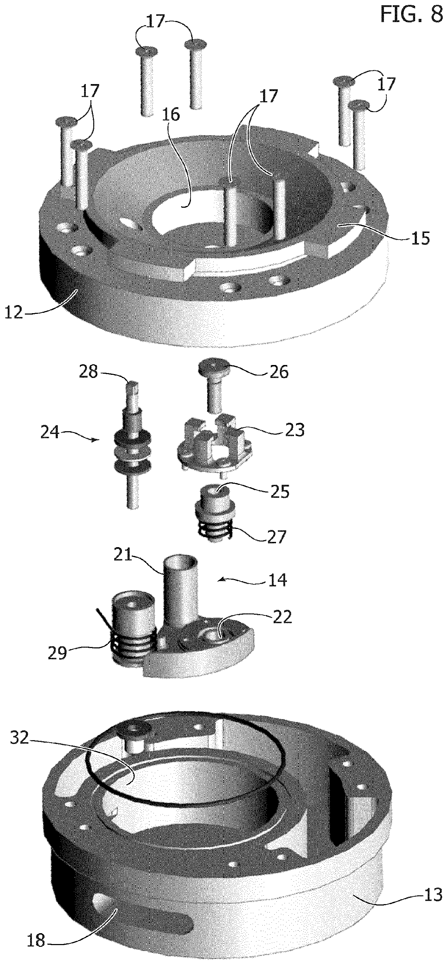

With reference to figures 6-8, below is the description of the aforementioned diverter 6 comprising a casing formed by a first 12 and a second 13 portion coupled by means of screws 17. Provided inside such casing is a seat 32 in which there is hinged a shutter 14 movable between two different positions as will be described hereinafter.

The first portion 12 of the casing of the diverter 6 comprises a mechanical interface 15 with the launch tube, and a pneumatic interface 16 with the pneumatic system of the launch tube.

The second portion 13 of the casing comprises an air opening 18.

The shutter 14 comprises a plate-like body 19 hinged to the casing 12, 13 of the diverter 6 by means of a pin 24 and it has a first end provided with a folded edge which forms a wall 20 perpendicular to the body 19. Obtained on a second end of the body 19 opposite to the wall 20 is a converging tubular duct 21 and, obtained between the duct 21 and the wall 20 on the body 19 is a circular opening 22 carrying a cage 23 for supporting a plunger 25, 26 slidable axially to selectively open or close the opening 22.

The shutter 14 can be driven in rotation - as will be described hereinafter - by means of a torsional spring 29 coaxial with the aforementioned pin 24. The piston comprises a hollow secondary plunger 25 within which an inner piston 26 can slide axially. The secondary plunger 25 is movable axially by means of a spring 27 so as to selectively open or close the opening 22. Furthermore, the pin 24 is provided with a switch 28 designed to manually rotate the shutter 14.

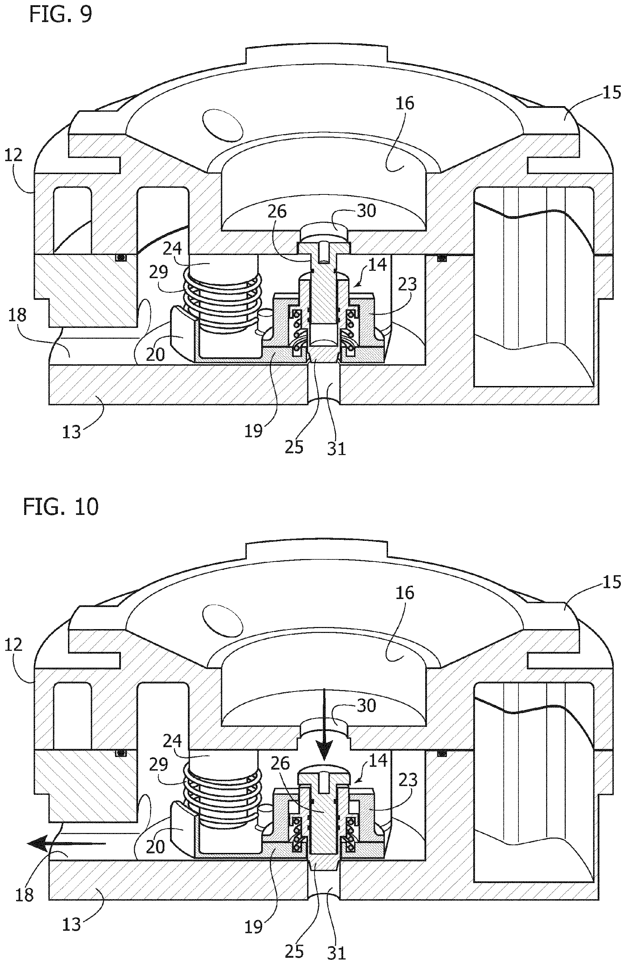

With reference to figures 9-14, below is the explanation on how the container 1 for housing and launching sonar buoys 2, 3 according to the invention operates.

Figure 9 shows the diverter 6 in the position provided for when two buoys of class G 2 are housed in the container 1 and in which the inner plunger 26 projects from the secondary plunger 25 shutting the air inlet 30 of the pneumatic interface.

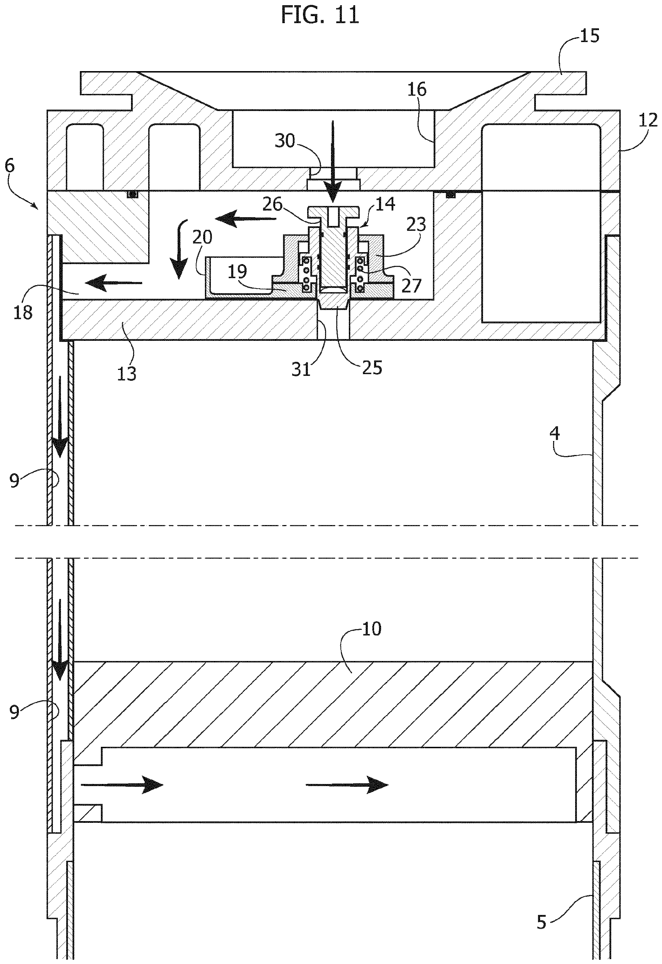

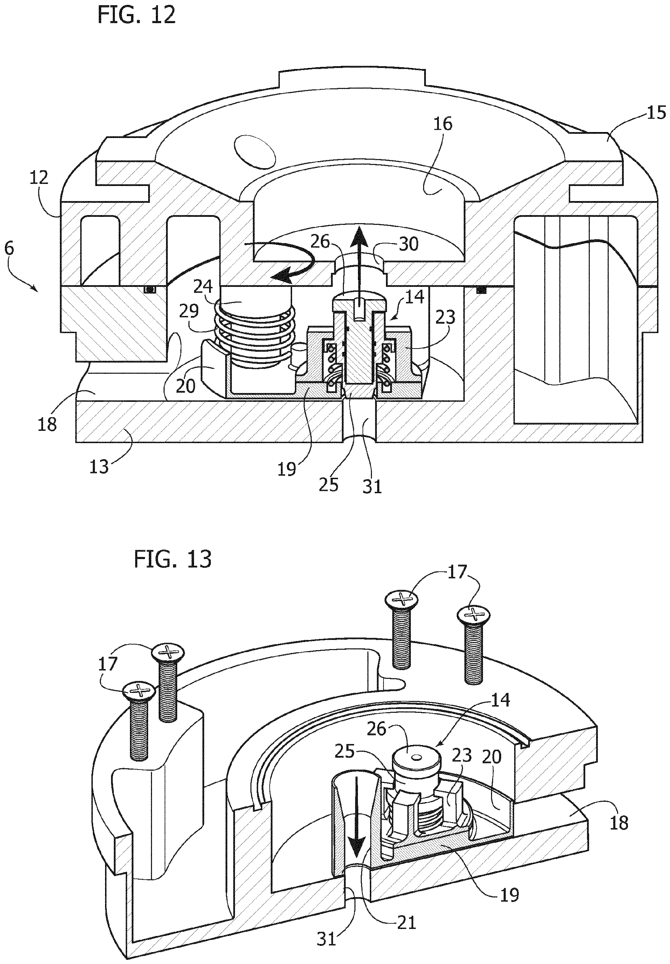

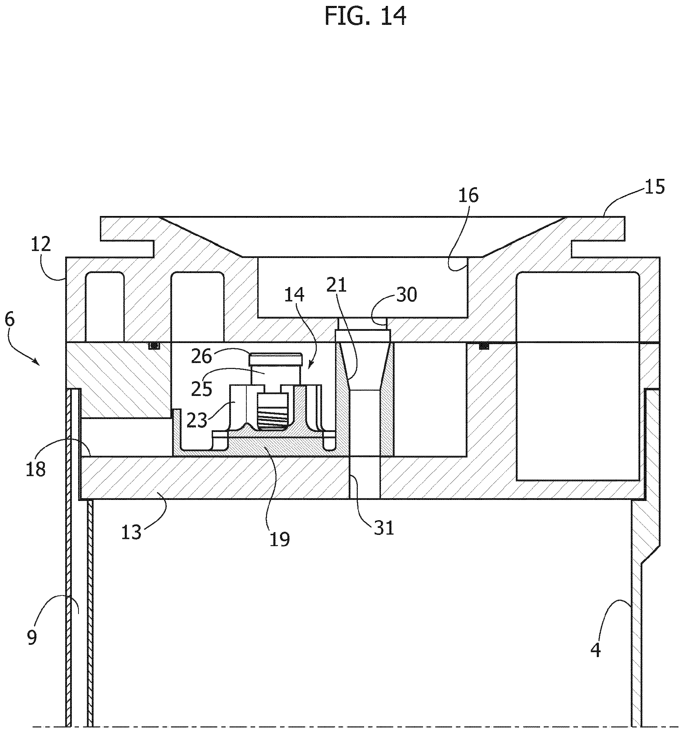

With reference to figure 10, in order to eject the second buoy 2 from the container 1 a first impulse is sent by means of the pneumatic system, the pressurised air presses the inner plunger 26 inside the secondary plunger 25, opening the inlet 30, while the secondary plunger 25 is pressed inside the first pneumatic connection 31, which places the diverter 6 in communication with the first portion 4 of the casing. The air flowing into the diverter 6 is thus conveyed into the opening 18 and subsequently, as shown in figure 11, into the plurality of tubes 9 embedded along the outer wall of the first portion 4 of the casing, and lastly it flows into the second portion 5 of the casing, pressurising it until the second cap 11 is removed and the second buoy 2 is ejected from the container 1. As observable in figure 12, when the air impulse ends and the second buoy 2 is ejected, the spring 27 presses the secondary plunger 25 which, by sliding axially, opens the first pneumatic connection 31 and releases the shutter 14 which, by effect of the spring 29, rotates to the second position visible in figure 13. The rotation of the shutter 14 to such position causes the wall 20 to occlude the opening 18, and the converging duct 21 is arranged so as to place the pneumatic system in communication with the first portion 4 of the casing through the first pneumatic connection 31. As observable in figure 14, thanks to this configuration of the shutter 14, upon a subsequent pneumatic impulse of the system, the air converges into the first portion 4 of the casing through the converging duct 21, pressurising it until the first cap 10 is removed and the first buoy 2 is ejected from the container 1.

Conveniently according to the invention, the casing 4, 5 is configured to make the presence or the absence of the first cap 10 selective so as to be adapted to house a single buoy of class A 3. Thus, in order to configure the container 1 of sonar buoys according to the invention so as to house and launch a buoy of class A 3, an operator removes the first cap 10 from the casing 4, 5, uses the switch 28 to set the shutter 14 to the aforementioned second position visible in figure 13, so that at the first pulse of the pneumatic system the air is conveyed into the casing 4 passing through the converging duct 21 and the first pneumatic connection 31. The air pressure inside the casing 4 increases until the second cap 11 is removed and the buoy of class A 3 is expelled from the container 1.

Obviously, the construction details and the embodiments may widely vary with respect to what has been described and illustrated, without departing from the scope of protection of the present invention as defined in the claims that follow. Thus, for example, the general conformation of the diverter 6 could be different from the one represented in the drawings.

## Claims

1. Container (1) for housing and launching sonar buoys (sonobuoy) designed to be installed in a launch tube provided with a pneumatic system, said container (1) including:
a cylindrical casing comprising a first portion (4) designed to contain a first sonobuoy of class G (2), and a second portion (5) designed to contain a second sonobuoy of class G (34),
a diverter (6) applied at one end of the casing and provided with an interface (16) with said pneumatic system of the launch tube,
a first watertight cap (10) for separating said first (4) and said second (5) portion of the casing from each other,
a second cap (11) for the watertight front closing of the end of the casing opposite to the one in which said diverter (6) is applied,
a first pneumatic connection (31) between said diverter (6) and said first portion (4) of the casing,
a second pneumatic connection (9) between said diverter (6) and said second portion (5) of the casing,
said diverter (6) being provided with a shutter (14) automatically switchable from a first position, in which it connects said pneumatic system with said second portion (5) of the casing by means of said second pneumatic connection (9), so as to eject said second cap (11) and said second buoy (2) from said container (1), to a second position, in which it places said pneumatic system in communication with said first portion (4) of the casing by means of said first pneumatic connection (31), so as to eject said first cap (10) and said first buoy (2) from said container (1), **characterised in that**
said casing (4, 5) is configured to make the presence or absence of said first cap (10) selective so as to be adapted to house a single buoy of class A (3), and **in that**
said shutter (14) is set in said second position in the absence of said first cap (10).

2. Container (1) according to claim 1, **characterised in that** said diverter (6) comprises a casing (12, 13) provided with an air opening (18) and in which there is hinged said shutter (14) comprising a plate-like body (19) including:
an end edge folded so as to form a wall (20) extending perpendicularly to said plate-like body (19),
an opening (22) bearing a cage (23) supporting an axially slidable plunger (25, 26),
a tubular duct (21) arranged adjacent to said cage (23),
means (29) designed to drive said shutter (14) in rotation between a first position, in which the piston (25, 26) shuts the first pneumatic connection (31) and said pneumatic system is placed in communication with the second portion (5) of the casing by means of said opening (18) and said second pneumatic connection (9), and
a second position, in which the piston (25, 26) opens the first pneumatic connection (31), the wall (20) occludes the opening (18), and said duct (21) places the pneumatic system in communication with said first portion (4) of the casing by means of said first pneumatic connection (31).

3. Container (1) according to claim 2, **characterised in that** said plunger comprises an inner plunger (26), a secondary plunger (25) and a spring (27) configured so that:
during a first impulse of said pneumatic system the inner plunger (26) retracts into the secondary plunger (25) and the secondary plunger (25) occludes said first pneumatic connection (31) locking the rotation of said shutter (14), and
at the end of said first impulse of the pneumatic system, said spring (27) actuates said secondary plunger (25) so as to open said first pneumatic connection (31) and to release the rotation of said shutter (14).

4. Container (1) according to any one of the preceding claims, **characterised in that** said shutter (14) comprises a switch (28) designed to manually switch said shutter (14) to said second position when said casing (4, 5) is adapted to house a single buoy of class A (3).

5. Container (1) according to one of claims 2 to 4, **characterised in that** said means designed to drive said shutter (14) in rotation comprise a torsion spring (29) .

6. Container (1) according to any one of the preceding claims, **characterised in that** said second pneumatic connection (9) comprises at least one tube embedded inside the side wall (4) of said container (1).

7. Container (1) according to any one of the preceding claims, **characterised in that** said container (1) comprises a pair of openings (7, 8) designed for the setting of said buoys (2, 3) and of said cap (10).
